# EUROPEAN PATENT APPLICATION

(11) **EP 3 763 991 A1**
(43) Date of publication of application: **13.01.2021**
(21) Application number: 19185991.7
(22) Date of filing: 12.07.2019
(51) Int. Cl.: F17C 13/06

(54) **PRESSURE VESSEL FOR STORING HIGH PRESSURE GAS**

(71) Applicant: Il Sung Machinery Co., Ltd., Gyeongsangbuk-do 39367 (KR)
(72) Inventor: KIM, Ki Young, 42114 Daegu (KR)
(74) Representative: dompatent von Kreisler Selting Werner - Partnerschaft von Patent- und Rechtsanwälten mbB

(57) **Abstract**

The present invention relates to a pressure vessel for storing high pressure gas, the pressure vessel including: a liner (10) provided to be a tube body of a predetermined diameter and having male thread parts (102) provided on opposite end parts thereof; inserts (20) having combining parts (201) provided on outer surfaces thereof and through holes (202) provided on middle parts thereof; a first sealing member (30) provided between the end of the liner (10) and the inner surface of the insert (20); a fastening member (40) having a female thread part (401) screwed to each of the male thread parts (102) and having a combination hole (402) into which each of the combining parts (201) is inserted; and a reinforcing wire (50) wound so as to cover an entirety of an outer circumferential surface of the liner (10).

## Description

### BACKGROUND OF THE INVENTION

### Field of the Invention

The present invention generally relates to a pressure vessel for storing high pressure gas. More particularly, the present invention relates to a pressure vessel for storing high pressure gas, wherein a fastening member is screwed to an outer part of a liner so as to prevent volume of a through-hole part from decreasing, a screw ring provided independently of the liner is welded on the liner so as to have a screw part such that workability and precision of the screw part are improved, strength of the liner is reinforced by the fastening member, and an end part of a reinforcing wire wound on the liner is welded on and fixed on the fastening member so as to prevent degradation of the liner.

### Description of the Related Art

Generally, with rapid industrialization, consumption of fossil fuels increases exponentially and accordingly, environmental pollution comes to the fore as a critical social issue. Various countries of the world are making many efforts to reduce vehicle exhaust gas considered to be a main source of the environmental pollution.

Accordingly, hydrogen fuel as clean fuel has been developed so as to replace gasoline or diesel, which is the existing vehicle fuel.

Hydrogen is the richest element after carbon and nitrogen on the earth and is a clean energy source which never produces pollutants other than only a very slight amount of nitrogen oxide during burning. In addition, hydrogen can be produced by using almost an infinite amount of water existing on the earth as a raw material and, due to recirculation to water after usage, is an optimal energy source with little worry of exhaustion.

Accordingly, much attention is paid to hydrogen fuel as next generation fuel capable of solving many problems such as resource exhaustion and environmental pollution facing presently, and various researches are actively being pursued such that hydrogen is used for vehicle fuel and for industries or general homes.

Meanwhile, to commercialize hydrogen as an energy resource, above all, hydrogen charging stations are required to be built. To this end, a compressor compressing hydrogen at high pressure and a pressure vessel for storing hydrogen, which can efficiently store hydrogen of high pressure, are required to be developed.

The vessel for storing hydrogen is a vessel storing hydrogen gas compressed at high pressure and is exposed to an environment ranging from -40°C to 85°C during gas charging/discharging. Accordingly, the vessel is required to obtain durability capable of bearing repeated charging/discharging of at least 10,000 times according to target life of 30 years.

The pressure vessel for storing the high pressure gas is divided into a total of four types of vessels such as type-1, type-2, type-3, and type-4 according to methods reinforcing materials and composite materials to be used. The pressure vessel is used as a tube trailer for transport and a hydrogen charging station, and is mounted on a hydrogen electric vehicle.

Since type-3 and type-4 use carbon materials and thus are lighter, type-3 and type-4 are fit for a vehicle due to good fuel efficiency, but manufacturing cost is high.

Accordingly, type-1 and type-2 are mostly used on the land on which problems caused by weight do not occur and high capacity storage is necessary so as to solve a storage issue, wherein type-2 has a method of winding a reinforcing member made by impregnating resin with glass fiber or carbon fiber on a liner made of a metal material, whereby type-2 increases storage pressure and is light compared to type-1 made of a metal material, and accordingly, is preferred as a high-capacity pressure vessel provided on the land.

Meanwhile, as described above, to have the high pressure gas filled therein or to install various kinds of attached devices such as a gauge for measuring pressure and remaining gas volume, a pressure vessel for storing high pressure gas has a female thread part formed on an inner circumferential surface of a liner of the pressure vessel; a cap, which has a male thread part, screwed to the female thread part; and an airtightness sealant provided on the screwed part so as to prevent gas leak of the screwed part.

However, in the conventional high-capacity pressure vessel, the cap screwed to the female thread part formed on an end part of the liner is inserted into and screwed to a through-hole part of a gas-filled liner, whereby the cap occupies a considerable amount of space of the through-hole part, and accordingly, volume of the through-hole part for storing gas is decreased.

In addition, when the cap is excessively fastened so as to increase sealing power of each of opposite end parts of the liner by screwing the cap to the liner, an inner diameter of each of the opposite end parts of the liner is increased by fastening pressure of the cap, whereby a gap occurs between the female thread part of the liner and the male thread part of the cap and accordingly, the possibility of gas leak increases.

Furthermore, the high-capacity pressure vessel reaches several meters in length and may be more than 10m in a case of a higher capacity vessel. Accordingly, it is difficult to handle the long pressure vessel when forming the female thread part on the inner circumferential surface of the end part thereof, and thus precision processing of the female thread part is also difficult. Additionally, the pressure vessel of type-2 has a reinforcing wire made of a metal material wound on an outer part of the liner so as to reinforce strength. The wound reinforcing wire is required to be welded on the liner of the pressure vessel such that opposite end parts of the wound reinforcing wire are fixed on the liner. Accordingly, during welding, the pressure vessel is damaged due to degradation the pressure vessel caused by high temperature heating applied to the pressure vessel and accordingly, the danger of gas leak increases.

### Document of Related Art

(Patent Document 1) Korean Patent No. 10-0804789

### SUMMARY OF THE INVENTION

Accordingly, a pressure vessel for storing high pressure gas of the present invention has been made keeping in mind the above problems occurring in the related art, and the present invention is intended to propose the pressure vessel for storing high pressure gas, wherein a liner has a male thread part formed on an outer circumferential surface thereof so as to be screwed to a fastening member such that reduction of volume of a through-hole part filled with gas is minimized.

In addition, a screw ring provided independently of the liner is welded on the liner so as to be provided integrally therewith such that workability and precision of a screw part are improved.

Furthermore, strength of the liner is reinforced by the fastening member screwed to the liner.

Additionally, an end part of a reinforcing wire wound on the outer circumferential surface of the liner is welded on and fixed on the fastening member so as to prevent degradation of the liner.

In addition, the reinforcing wire wound on the outer circumferential surface of the liner is supported by the fastening member screwed to each of opposite end parts of the liner such that a wound state of the reinforcing wire is stably maintained.

The pressure vessel for storing high pressure gas of the present invention is intended to solve the above problems occurring in the related art, wherein a gas leak detection means is provided so as to detect gas leak quickly and easily during the gas leak.

In order to achieve the above object, according to one aspect of the present invention, there is provided a pressure vessel for storing high pressure gas, the pressure vessel including: a liner 10 provided to be a tube body of a predetermined diameter and having male thread parts 102 formed on opposite end parts thereof; inserts 20 having combining parts 201 provided on outer surfaces thereof and having through holes 202 provided on middle parts thereof, each of the inserts being provided symmetrically to each other on each of opposite ends of the liner 10 such that an inner surface of the insert is in close contact with the end of the liner 10; a first sealing member 30 provided between the end of the liner 10 and the inner surface of the insert 20 so as to maintain airtightness; a fastening member 40 having a female thread part 401 screwed to each of the male thread parts 102 and having a combination hole 402 into which each of the combining parts 201 is inserted, the fastening member pressing the insert 20 to the end of the liner 10 so as to bring the insert into close contact with the end of the liner while being screwed to the male thread part 102; and a reinforcing wire 50 wound so as to cover an entirety of an outer circumferential surface of the liner 10, each of opposite end parts of the reinforcing wire being attached to and fixed on the fastening member 40.

The male thread part 102 may be provided on an outer circumferential surface of a screw ring 104 provided independently of the liner 10, wherein the screw ring 104 is welded on each of the opposite end parts of the liner 10 so as to be integrally provided therewith.

The fastening member 40 may further include a covering part 403 of a ring shape provided by protruding by a predetermined length from the female thread part 401 to an outer side thereof so as to cover the outer circumferential surface of the liner 10.

The fastening member 40 may further include an insert groove 404 formed on an inner end part thereof, into which the end part of the reinforcing wire 50 is inserted so as to be welded thereon.

A second sealing member 31 may further be provided between the end of the liner 10 and the inner surface of the insert 20, the second sealing member having a diameter larger than a diameter of the first sealing member 30.

The insert 20 may include a leak inducing hole 205 provided so as to be formed through the insert from the inner surface thereof to each of the outer surfaces thereof, wherein an inner side entrance of the leak inducing hole 205 may be positioned between the first sealing member 30 and the second sealing member 31, and a gas leak detection means 60 may be provided at an outer side exit of the leak inducing hole 205.

The gas leak detection means 60 may include a color-change display part 601 on which color changes in response to gas leaking through the leak inducing hole 205.

The gas leak detection means 60 may include a pressure detection part 602 detecting pressure of gas leaking through the leak inducing hole 205.

The gas leak detection means 60 may include: a gas detection part 603 detecting gas leaking through the leak inducing hole 205; a wireless transmission part 604 transmitting an alarm signal according to the gas leak detection of the gas detection part 603; a wireless receiving part 605 receiving the signal transmitted from the wireless transmission part 604; and an alarm part 606 output by an audiovisual means according to the signal received by the wireless receiving part 605.

According to the pressure vessel for storing high pressure gas of the present invention, the liner has the male thread part formed on the outer circumferential surface thereof so as to be screwed to the fastening member such that reduction of volume of a through-hole part filled with gas is minimized.

In addition, the screw ring provided independently of the liner is welded on the liner so as to be provided integrally therewith such that workability and precision of a screw part are improved.

Furthermore, the fastening member screwed to the liner is configured so as to cover the outer circumferential surface of each of the opposite end parts of the liner, whereby strength of the liner is reinforced.

Additionally, the end part of the reinforcing wire wound on the outer circumferential surface of the liner is welded on and fixed on the fastening member, whereby degradation of the liner is prevented.

In addition, the reinforcing wire wound on the outer circumferential surface of the liner is supported by the fastening member screwed to each of the opposite end parts of the liner such that a wound state of the reinforcing wire is stably maintained, whereby strength of the liner increased by the reinforcing wire is stably maintained.

Furthermore, the gas leak detection means is provided, whereby during gas leak, the gas leak is quickly and easily detected.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a perspective view illustrated according to an embodiment of a pressure vessel for storing high pressure gas of the present invention;
FIG. 2 is a cross-sectional view of an end part according to the embodiment of the pressure vessel for storing high pressure gas of the present invention;
FIG. 3 is a cross-sectional view of the end part illustrating another embodiment of a screw part of the pressure vessel for storing high pressure gas of the present invention;
FIG. 4 is a cross-sectional view of the end part illustrating another installation state of a first sealing member of the pressure vessel for storing high pressure gas of the present invention;
FIG. 5 is a cross-sectional view of the end part illustrating another embodiment of a fastening member of the pressure vessel for storing high pressure gas of the present invention;
FIG. 6 is a cross-sectional view of the end part illustrating a second sealing member, a leak inducing hole, and a gas leak detection means of the pressure vessel for storing high pressure gas of the present invention;
FIG. 7 is a cross-sectional view of the end part illustrating another embodiment of the second sealing member and the leak inducing hole of the pressure vessel for storing high pressure gas of the present invention; and
FIG. 8 is a cross-sectional view of the end part illustrating another embodiment of the gas leak detection means of the pressure vessel for storing high pressure gas of the present invention.

### DETAILED DESCRIPTION OF THE INVENTION

Hereinbelow, in describing in detail a pressure vessel for storing high pressure gas of the present invention, reference will now be made in detail to embodiments of the present invention, a specific example of which is illustrated in the accompanying drawings and described below, since the embodiments of the present invention can be variously modified in many different forms. While the present invention will be described in conjunction with the exemplary embodiments thereof, it is to be understood that the present description is not intended to limit the present invention to the exemplary embodiments. On the contrary, the present invention is intended to cover not only the exemplary embodiments, but also various alternatives, modifications, equivalents and other embodiments that may be included within the spirit and scope of the present invention as defined by the appended claims.

In addition, although operation effects according to configurations of the present invention are not specified in describing the embodiments of the present invention, predictable effects according to the configurations should be appreciated.

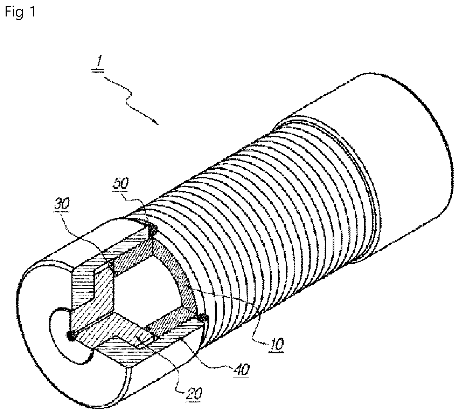

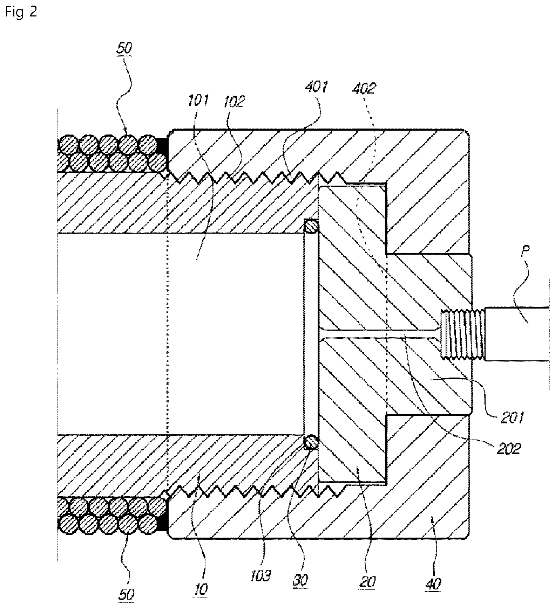

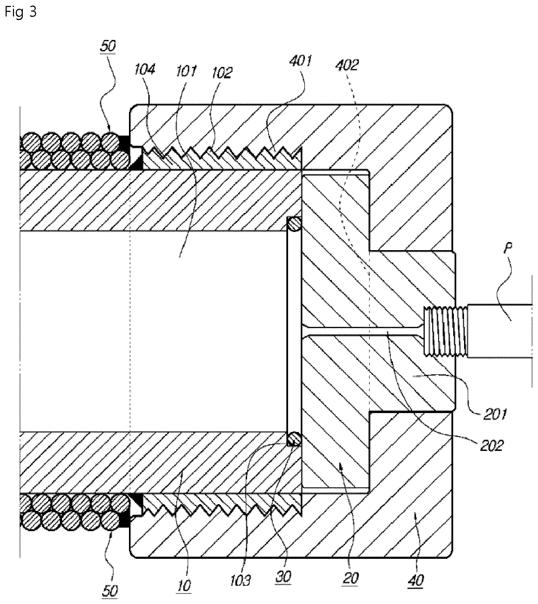

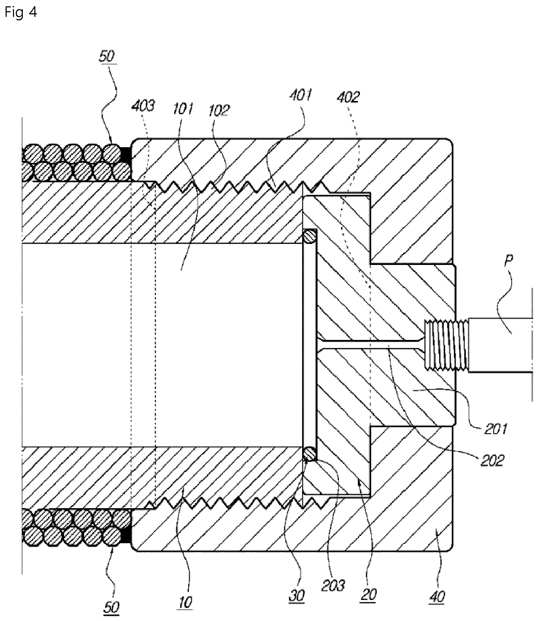

FIG. 1 is a perspective view illustrated according to an embodiment of a pressure vessel for storing high pressure gas of the present invention; FIG. 2 is a cross-sectional view of an end part according to the embodiment of the pressure vessel for storing high pressure gas of the present invention; FIG. 3 is a cross-sectional view of the end part illustrating another embodiment of a screw part of the pressure vessel for storing high pressure gas of the present invention; and FIG. 4 is a cross-sectional view of the end part illustrating another installation state of a first sealing member of the pressure vessel for storing high pressure gas of the present invention;

The pressure vessel will be described referring to FIGS. 1 to 4.

The pressure vessel for storing high pressure gas of the present invention includes a liner 10, inserts 20, a first sealing member 30, fastening members 40, and a reinforcing wire 50.

The liner 10 is configured so as to be a metal tube body of a predetermined diameter and includes a through-hole part 101 filled with the high pressure gas therein. Preferably, the liner is configured to have the same thickness and diameter along a longitudinal direction thereof.

A male thread part 102 is formed on the outer circumferential surface of each of opposite end parts of the liner 10 so as to be screwed to each of the fastening members 40.

The male thread part 102 of the liner 10 may be formed on an outer circumferential surface of a screw ring 104 provided independently of the liner 10, and the screw ring 104 may be welded on the end part of the liner 10 so as to be integrally provided therewith.

Accordingly, the male thread part is not formed directly on the outer circumferential surface of each of the opposite end parts of the liner 10, which reaches several meters in length, and after the male thread part 102 is formed on the outer circumferential surface of the independently provided screw ring 104, which is short in length, the screw ring is forcibly fitted over the end part of the liner 10 and welded thereon so as to be integrally provided therewith, whereby workability and precision of the male thread part 102 may be improved.

Each of the inserts 20 is provided symmetrically to each other on each of opposite ends of the liner 10 so as to be in close contact therewith, and includes a combining part 201 and a through hole 202.

The insert 20 is fixed on each of the opposite ends of the liner 10 so as to be in close contact therewith by the fastening member 40, and accordingly, the through-hole part 101 of the liner 10 is sealed by the insert 20.

The insert 20 has the combining part 201 provided on a middle of an outer surface thereof by protruding therefrom to an outside and is combined with the fastening member 40.

The through hole 202 is formed on a middle part of the insert 20 and is formed through the insert 20 from an inner surface of the insert 20 to an outer surface of the combining part 201. In this case, preferably, the through hole 202 includes a screw thread formed on an outer exit thereof so as to allow a piping equipment P to be connected with the through hole such that the through-hole part 101 of the liner 10 is filled with the high pressure gas.

The first sealing member 30 is provided between the end of the liner 10 and the inner surface of the insert 20 so as to maintain airtightness of the through-hole part 101.

As shown in FIG. 2, to stably provide the first sealing member 30, a first installation groove 103 of a concave shape is formed on an edge of an inner circumferential surface of the end part of the liner 10 such that the first sealing member 30 is inserted into the first installation groove 103.

In addition, as shown in FIG. 4, a second installation groove 203 of a concave shape may be formed on the inner surface of the insert 20 such that the first sealing member 30 is inserted into the second installation groove 203.

The first sealing member 30 provided as described above is formed in a ring shape so as to be provided between the end of the liner 10 and the inner surface of the insert 20, and accordingly, airtightness is maintained therebetween by elastic contact, whereby gas leak is prevented from occurring between an outer surface of the liner 10 and the inner surface of the insert 20.

The first sealing member 30 preferably is an O-ring made of a rubber or a synthetic rubber, which is transformable elastically, but is not limited thereto. The first sealing member may be an O-ring made of a metal material.

The fastening member 40 includes a female thread part 401 and a combination hole 402.

The female thread part 401 is screwed to the male thread part 102 of the liner 10.

The combining part 201 of the insert 20 is inserted into the combination hole 402.

Accordingly, as the female thread part 401 is screwed to the male thread part 102 of the liner 10, the combining part 201 of the insert 20 is inserted into the combination hole 402 of the fastening member 40. Middles of the fastening member 40 screwed to the liner 10 and the insert 20 correspond to a middle of the liner 10, and accordingly, the inner surface of the insert 20 is pressed to the end of the liner 10 and is in close contact therewith.

In addition, as the fastening member 40 is fastened, the insert 20 is pressed to a direction of the liner 10 and is in close contact therewith, and distance between the end of the liner 10 and the inner surface of the insert 20 becomes short. Accordingly, the first sealing member 30 provided between the liner 10 and the insert 20 is in closer contact therewith such that airtightness is improved.

Furthermore, the fastening member 40 is screwed to the end part of the liner 10 so as to cover an outer part thereof, and in the fastening process of the fastening member 40, the end part of the liner 10 may be prevented from extending outward, or a gap between the liner 10 and the fastening member 40 may be prevented from occurring so as to prevent gas leak.

As described above, the fastening member 40 is manufactured independently of the insert 20 and is screwed to the liner 10, whereby fastening convenience may be improved.

The fastening member 40 may further include a covering part 403 of a ring shape provided by protruding by a predetermined length from the female thread part 401 to an outer side thereof so as to cover the outer circumferential surface of the liner 10.

Accordingly, when the female thread part 401 of the fastening member 40 is screwed to the male thread part 102, the covering part 403 is in contact with an outer circumferential surface of an inner side of the male thread part 102 of the liner 10 so as to cover the male thread part 102 such that the male thread part is not exposed to an outside, whereby the reinforcing wire 50 is prevented from being irregularly laminated while the reinforcing wire 50 is wound on the male thread part 102.

Meanwhile, a length of the female thread part 401 is configured to be longer than a length of the male thread part 102, and when the fastening member 40 is screwed to the liner 10, the male thread part 102 is not exposed to the outside, whereby the reinforcing wire 50 is prevented from being irregularly laminated while the reinforcing wire 50 is wound on the male thread part 102.

Additionally, the female thread part 401 of the fastening member 40 is screwed to an entirety of the male thread part 102 of the liner 10 having strength decreased by thickness of the male thread part becoming thinner as the male thread part 102 is formed, whereby the fastening member 40 reinforces the strength of the male thread part 102 of the liner 10.

A shape of a cross-section of the fastening member 40 may be a circle or a polygon.

When the cross-section of the fastening member 40 is formed to be the polygon, the fastening member may be prevented from rolling unintentionally even when the fastening member is arranged on a foundation.

Since the fastening member 40 is configured to be screwed to the liner 10, open space is sufficiently obtained for maintenance of the fastening member and attachment/detachment thereof are also easy, whereby maintenance convenience is improved, processing and manufacturing thereof by normal machine tools are easy, and manufacturing convenience is also improved.

The reinforcing wire 50 is wound on the outer circumferential surface of the liner 10 so as to cover the entirety thereof, wherein each of opposite end parts of the reinforcing wire 50 is attached to and fixed on the fastening member 40 and reinforces strength of the liner 10.

That is, the reinforcing wire 50 is wound on the outer circumferential surface of the liner 10 to cover the entirety thereof so as to support hoop stress applied to the liner 10 by the high pressure gas with which the through-hole part 101 of the liner 10 is filled.

A material of the reinforcing wire 50 is preferably a metal material, but is not limited thereto, and may be carbon fiber or glass fiber.

In addition, a diameter of the reinforcing wire 50 is not limited, but when the diameter of the reinforcing wire 50 is thick, a gap between the reinforcing wire 50 wound on the liner 10 increases and the reinforcing wire 50 cannot sufficiently support inner pressure of the liner. In addition, relatively large power is required during winding the thick reinforcing wire.

Accordingly, using the reinforcing wire 50 of a small diameter is advantageous in terms of the reduction of a gap between the reinforcing wire 50 and of the winding power.

The diameter of the reinforcing wire 50 is preferably manufactured to range from 0.005mm to 2.5mm.

Meanwhile, the reinforcing wire 50 is wound on the outer circumferential surface of the liner 10 between the fastening members 40 screwed to the opposite end parts of the liner 10, and the opposite end parts of the reinforcing wire 50 are fixed on the fastening members 40, whereby the fastening members 40 support side surfaces of the reinforcing wire 50 such that a wound structure of the reinforcing wire 50 wound on the outer circumferential surface of the liner 10 is maintained.

Accordingly, a distance from a middle of the fastening member 40 to the outer circumferential surface of the fastening member 40 is configured to be thicker than a distance from the middle of the liner 10 to an outer surface of a most outer part of the reinforcing wire 50 laminated by being wound on the liner 10, and accordingly, preferably, the reinforcing wire 50 may be prevented from coming into contact with the foundation or from being damaged due to collision with external objects.

Meanwhile, to prevent the reinforcing wire 50 wound on the liner 10 from loosening, each of the opposite end parts of the reinforcing wire 50 is attached to the fastening member 40 so as to be fixed thereon, and may be fixed thereon by soldering or welding according to materials of the reinforcing wire 50.

In the related art, when the reinforcing wire 50 is welded on the liner 10, a welding rod and the liner 10 are exposed to high temperature, and accordingly, while the welding rod and the liner 10 melt at the same time, the reinforcing wire 50 is welded on the liner 10. In this case, a welded portion of the liner 10 is thermally damaged and accordingly, strength thereof decreases.

Accordingly, each of the opposite end parts of the reinforcing wire 50 is attached to and fixed on the fastening member 40, whereby thermal damage applied directly to the liner 10 may be minimized.

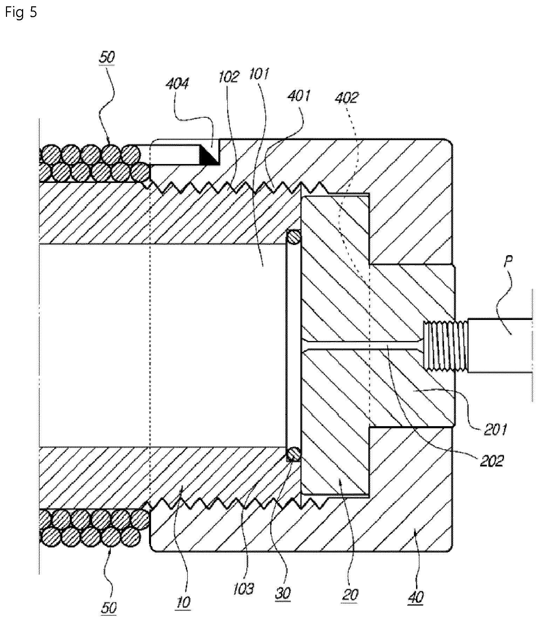

FIG. 5 is a cross-sectional view of the end part illustrating another embodiment of the fastening member of the pressure vessel for storing high pressure gas of the present invention.

The present invention will be described referring to FIG. 5.

The fastening member 40 may further include an insert groove 404 formed on an inner end part thereof, into which the end part of the reinforcing wire 50 is inserted so as to be welded thereon.

In this case, the insert groove 404 may be formed in a straight line type, in a zigzag type, or in an orthogonal type.

Accordingly, while the end part of the reinforcing wire 50 is inserted into the insert groove 404, soldering or welding is performed so as to fix the reinforcing wire 50 thereto, whereby the reinforcing wire 50 is more securely fixed to the insert groove.

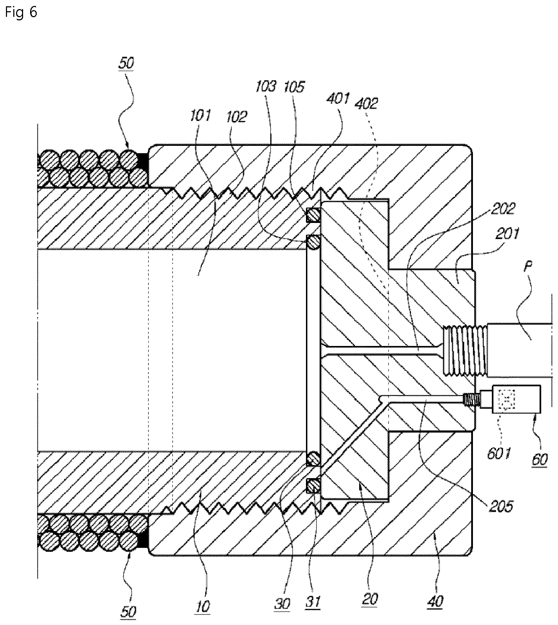

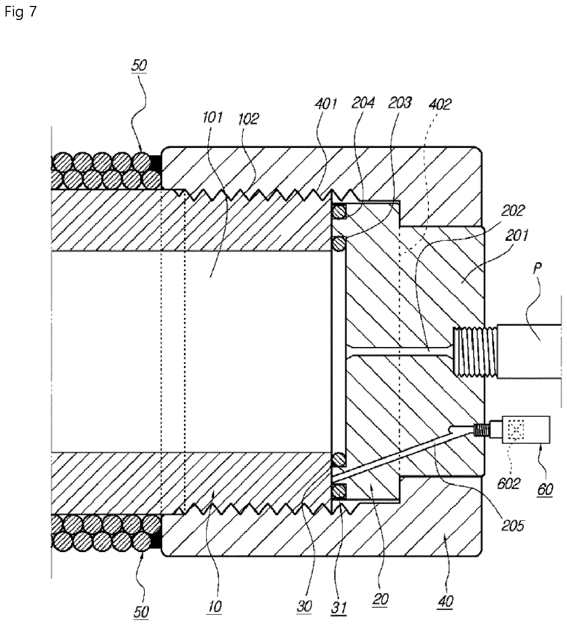

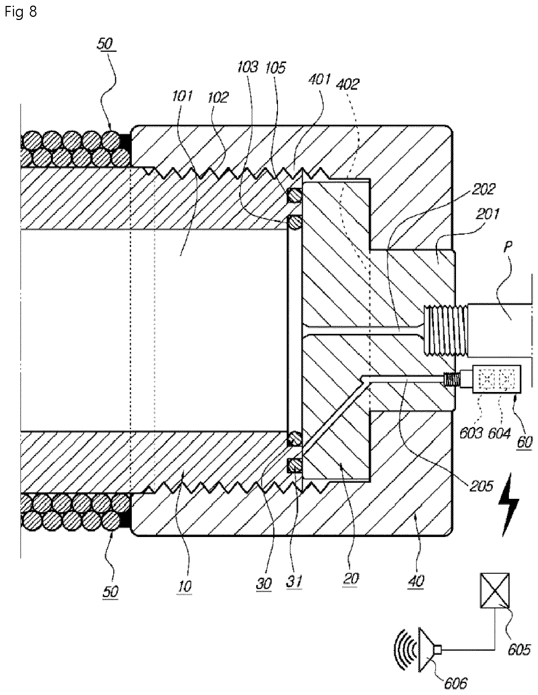

FIG. 6 is a cross-sectional view of the end part illustrating a second sealing member, a leak inducing hole, and a gas leak detection means of the pressure vessel for storing high pressure gas of the present invention; FIG. 7 is a cross-sectional view of the end part illustrating another embodiment of the second sealing member and the leak inducing hole of the pressure vessel for storing high pressure gas of the present invention; and FIG. 8 is a cross-sectional view of the end part illustrating another embodiment of the gas leak detection means of the pressure vessel for storing high pressure gas of the present invention.

The present invention will be described referring to FIGS. 6 to 8.

The second sealing member 31 may be provided between the end of the liner 10 and the inner surface of the insert 20, the second sealing member having a diameter larger than a diameter of the first sealing member 30.

That is, a third installation groove 105 of a ring shape is formed on the end of the liner 10, and the second sealing member 31 is preferably inserted into the third installation groove 105.

In addition, a fourth installation groove 204 of a ring shape is formed on the inner surface of the insert 20, and the second sealing member 31 may be inserted into the fourth installation groove.

The second sealing member 31 is provided between the end of the liner 10 and the inner surface of the insert 20 and is provided on an outer side of the first sealing member 30 due to a diameter larger than a diameter of the first sealing member 30, whereby the second sealing member 31 prevents gas leaking from the first sealing member 30 from leaking.

The second sealing member 31, like the first sealing member 30, preferably is an O-ring made of a rubber or a synthetic rubber, which is transformable elastically, but is not limited thereto. The second sealing member may be an O-ring made of a metal material.

The leak inducing hole 205 may be further provided on the insert 20.

The leak inducing hole 205 is provided so as to be formed through the insert from the inner surface thereof to each of the outer surfaces thereof, wherein an inner side entrance of the leak inducing hole 205 is positioned between the first sealing member 30 and the second sealing member 31, and a gas leak detection means 60 is provided at an outer side exit of the leak inducing hole 205.

Preferably, a screw thread is formed on an outer exit of the leak inducing hole 205 so as to have the gas leak detection means 60 easily provided thereon.

Accordingly, when gas leaks from the first sealing member 30, the leaking gas is not leaked between the end of the liner 10 and the inner surface of the insert 20 by the second sealing member 31, but is discharged through the leak inducing hole 205.

In this case, gas leak is immediately detected by the gas leak detection means 60 provided on an end part of an outer side of the leak inducing hole 205, whereby a quick handling is made possible in response to gas leak.

In addition, although gas leaks at any position of the first sealing member 30, the leaking gas is induced so as to be discharged to the leak inducing hole 205 by the second sealing member 31, whereby more accurate gas-leak detection may be performed.

As shown FIG. 6, the gas leak detection means 60 may include a color-change display part 601 on which color changes in response to gas leaking from the first sealing member 30.

In the color-change display part 601, a color is changed in a response to leaking gas, and accordingly, whether the color is changed is checked so as to quickly and simply check whether gas leak occurs.

Particularly, in a case of dangerous gas which may explode during leaking as hydrogen filled at high pressure, a manager can check whether gas leak occurs by checking the color-change display part 601 by naked eye without manipulating an additional device to check the gas leak. Accordingly, during gas leak, rapid safety measures such as ventilating or restricting access to combustible firearms can be taken.

Meanwhile, the color-change display part 601 has various materials electively provided thereon, colors of which are chemically changed according to gas types filling the pressure vessel for storing high pressure gas of the present invention, and can respond to various kinds of gas leak.

In addition, as shown in FIG. 7, the gas leak detection means 60 may include a pressure detection part 602 detecting pressure of gas leaking from the first sealing member 30.

The pressure detection part 602 preferably uses a pressure sensor detecting pressure change, but is not limited thereto.

When the pressure sensor is used as the pressure detection part 602, the pressure sensor can quickly and easily check whether gas occurs leak by detecting pressure change due to minute gas leak. Furthermore, since the price of the pressure sensor is very low, the sensor has excellent cost efficiency in gas leak detection.

As shown in FIG. 8, the gas leak detection means 60 may include a gas detection part 603, a wireless transmission part 604, a wireless receiving part 605, and an alarm part 606.

The gas detection part 603 detects gas leaking through the leak inducing hole 205.

In this case, a method detecting the leaking gas is not limited, but a color-change display means, which has color changed in response to gas according to gas types, may be used or a pressure detection means detecting gas pressure changing during gas leak may be used.

The wireless transmission part 604 transmits an alarm signal according to gas leak detection of the gas detection part 603. In this case, the alarm signal preferably includes an identifying code so as to identify a pressure vessel for storing high pressure gas.

In addition, the wireless transmission part 604 preferably uses a normal wireless local area communication means and, of course, includes a replaceable battery so as to be operated.

The wireless receiving part 605 is provided so as to be spaced apart by a predetermined distance from the pressure vessel for storing high pressure gas of the present invention, and preferably, uses the same communications standard as a communications standard of the wireless transmission part so as to receive wireless signals transmitted from the wireless transmission part 604.

The alarm part 606 is output by an audiovisual means such as a buzzer or a warning light according to a signal received by the wireless receiving part 605 and accordingly, allows a manager to immediately recognize whether gas leak occurs.

## Claims

1. A pressure vessel for storing high pressure gas, the pressure vessel comprising:
a liner (10) provided to be a tube body of a predetermined diameter and having male thread parts (102) formed on opposite end parts thereof;
inserts (20) having combining parts (201) provided on outer surfaces thereof and having through holes (202) provided on middle parts thereof, each of the inserts being provided symmetrically to each other on each of opposite ends of the liner (10) such that an inner surface of the insert is in close contact with the end of the liner (10);
a first sealing member (30) provided between the end of the liner (10) and the inner surface of the insert (20) so as to maintain airtightness;
a fastening member (40) having a female thread part (401) screwed to each of the male thread parts (102) and having a combination hole (402) into which each of the combining parts (201) is inserted, the fastening member pressing the insert (20) to the end of the liner (10) so as to bring the insert into close contact with the end of the liner while being screwed to the male thread part (102); and
a reinforcing wire (50) wound so as to cover an entirety of an outer circumferential surface of the liner (10), each of opposite end parts of the reinforcing wire being attached to and fixed on the fastening member (40).

2. The pressure vessel of claim 1, wherein
the male thread part (102) is provided on an outer circumferential surface of a screw ring (104) provided independently of the liner (10), wherein the screw ring (104) is welded on each of the opposite end parts of the liner (10) so as to be integrally provided therewith.

3. The pressure vessel of claim 1, wherein
the fastening member (40) further includes a covering part (403) of a ring shape provided by protruding by a predetermined length from the female thread part (401) to an outer side thereof so as to cover the outer circumferential surface of the liner (10).

4. The pressure vessel of claim 1, wherein
the fastening member (40) further includes an insert groove (404) formed on an inner end part thereof, into which the end part of the reinforcing wire (50) is inserted so as to be welded thereon.

5. The pressure vessel of claim 1, further comprising:
a second sealing member (31) provided between the end of the liner (10) and the inner surface of the insert (20), the second sealing member having a diameter larger than a diameter of the first sealing member (30).

6. The pressure vessel of claim 5, wherein
the insert (20) includes a leak inducing hole (205) provided so as to be formed through the insert from the inner surface thereof to each of the outer surfaces thereof, wherein
an inner side entrance of the leak inducing hole (205) is positioned between the first sealing member (30) and the second sealing member (31), and
a gas leak detection means (60) is provided at an outer side exit of the leak inducing hole (205).

7. The pressure vessel of claim 6, wherein
the gas leak detection means (60) includes a color-change display part (601) on which color changes in response to gas leaking through the leak inducing hole (205).

8. The pressure vessel of claim 6, wherein
the gas leak detection means (60) includes a pressure detection part (602) detecting pressure of gas leaking through the leak inducing hole (205).

9. The pressure vessel of claim 6, wherein
the gas leak detection means (60) includes:
a gas detection part (603) detecting gas leaking through the leak inducing hole (205);
a wireless transmission part (604) transmitting an alarm signal according to the gas leak detection of the gas detection part (603);
a wireless receiving part (605) receiving the signal transmitted from the wireless transmission part (604); and
an alarm part (606) output by an audiovisual means according to the signal received by the wireless receiving part (605) .

## Amended claims

### Amended claims in accordance with Rule 137(2) EPC.

1. A pressure vessel for storing high pressure gas, the pressure vessel comprising:
a liner (10) provided to be a tube body of a predetermined diameter and having male thread parts (102) formed on opposite end parts thereof;
inserts (20) having combining parts (201) provided on outer surfaces thereof and having through holes (202) provided on middle parts thereof, each of the inserts being provided symmetrically to each other on each of opposite ends of the liner (10) such that an inner surface of the insert is in close contact with the end of the liner (10);
a first sealing member (30) provided between the end of the liner (10) and the inner surface of the insert (20) so as to maintain airtightness;
a fastening member (40) having a female thread part (401) screwed to each of the male thread parts (102) and having a combination hole (402) into which each of the combining parts (201) is inserted, the fastening member pressing the insert (20) to the end of the liner (10) so as to bring the insert into close contact with the end of the liner while being screwed to the male thread part (102); and
a reinforcing wire (50) wound so as to cover an entirety of an outer circumferential surface of the liner (10), each of opposite end parts of the reinforcing wire being attached to and fixed on the fastening member (40); and **characterized in that** the pressure vessel further comprises:
a second sealing member (31) provided between the end of the liner (10) and the inner surface of the insert (20), the second sealing member having a diameter larger than a diameter of the first sealing member (30); and
wherein the insert (20) includes a leak inducing hole (205) provided so as to be formed through the insert from the inner surface thereof to each of the outer surfaces thereof, wherein
an inner side entrance of the leak inducing hole (205) is positioned between the first sealing member (30) and the second sealing member (31), and
a gas leak detection means (60) is provided at an outer side exit of the leak inducing hole (205).

2. The pressure vessel of claim 1, wherein
the male thread part (102) is provided on an outer circumferential surface of a screw ring (104) provided independently of the liner (10), wherein the screw ring (104) is welded on each of the opposite end parts of the liner (10) so as to be integrally provided therewith.

3. The pressure vessel of claim 1, wherein
the fastening member (40) further includes a covering part (403) of a ring shape provided by protruding by a predetermined length from the female thread part (401) to an outer side thereof so as to cover the outer circumferential surface of the liner (10) .

4. The pressure vessel of claim 1, wherein
the fastening member (40) further includes an insert groove (404) formed on an inner end part thereof, into which the end part of the reinforcing wire (50) is inserted so as to be welded thereon.

5. The pressure vessel of claim 1, wherein
the gas leak detection means (60) includes a color-change display part (601) on which color changes in response to gas leaking through the leak inducing hole (205).

6. The pressure vessel of claim 1, wherein
the gas leak detection means (60) includes a pressure detection part (602) detecting pressure of gas leaking through the leak inducing hole (205).

7. The pressure vessel of claim 1, wherein
the gas leak detection means (60) includes:
a gas detection part (603) detecting gas leaking through the leak inducing hole (205);
a wireless transmission part (604) transmitting an alarm signal according to the gas leak detection of the gas detection part (603);
a wireless receiving part (605) receiving the signal transmitted from the wireless transmission part (604); and
an alarm part (606) output by an audiovisual means according to the signal received by the wireless receiving part (605).
